# FASCICULE DE BREVET EUROPEEN

(11) **EP 2 039 208 B1**
(45) Date de publication et mention de la délivrance du brevet: **09.02.2011**
(21) Numéro de dépôt: 07803923.7
(22) Date de dépôt: 22.06.2007
(51) Int. Cl.: H04W 72/04, H04W 36/18

(54) **ORDONNANCEMENT DE TERMINAUX POUR L'ÉMISSION DE DONNÉES VERS UN TERMINAL SUR UN CANAL HSDPA PAR PLUSIEURS STATIONS DE BASE**
KOORDINATION VON ENDGERÄTEN ZUR DATENSENDUNG AN EIN ENDGERÄT AUF EINEM HSDPA-KANAL ÜBER MEHRERE BASISSTATIONEN
SCHEDULING OF TERMINALS FOR SENDING DATA TO A TERMINAL ON AN HSDPA CHANNEL VIA SEVERAL BASE STATIONS

(30) Priorité: 30.06.2006 FR 0652731
(43) Date de publication de la demande: 25.03.2009
(73) Titulaire: FRANCE TELECOM, 75015 Paris (FR)
(72) Inventeur: BONALD, Thomas, F-78960 Voisins Le Bretonneux (FR); HEGDE, Nidhi, F-75005 Paris (FR); PROUTIERE, Alexandre, F-75006 Paris (FR)
(74) Mandataire: Lecomte, Isabelle
(86) Numéro de dépôt international: PCT/FR2007/051500
(87) Numéro de publication internationale: WO 2008/000998

(56) Documents cités:
- US-A1- 2003 147 370
- FOLKE M, LANDSTRÖM S: "An NS Moduke for Simulation of HSPDA" TECHNICAL REPORT, [Online] avril 2006 (2006-04), pages 1-21, XP002419135 ISSN: 1402-1536 Extrait de l'Internet: URL:http://pure.ltu.se/ws/fbspretrieve/161 024> [extrait le 2007-02-08]
- "Universal Mobile Telecommunications System (UMTS)" ETSI STANDARDS, EUROPEAN TELECOMMUNICATIONS STANDARDS INSTITUTE, SOPHIA-ANTIPO, FR, vol. 3-R2, no. V700, mars 2006 (2006-03), XP014034282 ISSN: 0000-0001

## Description

L'invention concerne une technique d'ordonnancement pour un intervalle de temps d'émission donné, le temps étant divisé en intervalles de temps pour un multiplexage temporel des transmissions vers une pluralité de terminaux.

Une des fonctionnalités clés des évolutions envisagées pour la version R5 de la norme UMTS (Universal Mobile Telecommunications Systems) est l'introduction d'un canal radio à accès partagé dans le temps pour la transmission de paquets de données, à haut débit pour le sens descendant ; il s'agit du HSDPA pour "High Speed Downlink Packet Access". L'article intitulé "High Speed Downlink Packet Access (HSDPA)-Enhanced Data Rates for UMTS Evolution" de I. Forkela, H. Klennera, et A. Kempera, paru dans la revue Computer Networks Volume 49, Issue 3, 19 October 2005, Pages 325-340 présente de façon générale l'intégration du HSDPA dans la norme UMTS. Ce type d'accès permet d'augmenter la capacité offerte dans une cellule et d'offrir des débits plus importants, par rapport à la version R99 de l'UMTS, sur le lien radio descendant entre une station de base, appelée Node B, et une pluralité de terminaux mobiles. Le canal radio à accès partagé HS-DSCH (pour "High-Speed Downlink Shared CHannel"), canal descendant, est partagé dans le temps, dans une cellule donnée, entre une pluralité de terminaux mobiles, à l'aide d'un dispositif d'ordonnancement sélectionnant un terminal mobile récepteur pour un intervalle de temps donné. Les paquets de données transmis aux terminaux mobiles sont multiplexés dans le temps par une station émettrice, chaque terminal recevant tour à tour des paquets de données transmis durant des "slots", ou intervalles de temps, de l'ordre de la milliseconde, respectivement alloués aux différents terminaux. Par exemple, pour un ordonnancement de type opportuniste, durant un intervalle de temps d'émission donné, le dispositif d'ordonnancement choisit d'émettre vers un terminal mobile dont les conditions radio sont favorables. A cette fin, le dispositif d'ordonnancement utilise des mesures radio, effectuées par les terminaux mobiles sur un signal radio de référence de la cellule et remontées au Node B. Cette technique permet de prendre en compte les évolutions rapides de la qualité de la liaison radio entre le Node B et un terminal mobile. Cette technique met en oeuvre également une adaptation des formats de modulation et de codage utilisés pour la transmission en fonction de la qualité de la liaison radio et un protocole de retransmission spécifique HARQ pour "Hybrid Automatic Request".

De plus, le terminal mobile peut se trouver dans une zone de recouvrement d'une première et d'une deuxième cellule et être rattaché indifféremment à la station émettrice de la première ou à celle de la deuxième cellule. Ces stations émettrices peuvent appartenir à deux Nodes B distincts ou être toutes les deux intégrées à un même Node B, dotés de deux antennes radio couvrant deux secteurs angulaires distincts. Selon la version R99 de la norme UMTS, le terminal mobile peut maintenir une pluralité de liens radios simultanés avec une pluralité de stations émettrices respectivement, afin de faciliter le passage d'une cellule à l'autre. Cette technique, appelée "soft handover" ou transfert intercellulaire souple, permet en outre d'augmenter la puissance du signal reçu par le terminal dans des zones de forte interférence telles que les zones de recouvrement de deux cellules, car les différentes stations émettrices engagées dans le "soft handover" transmettent simultanément les mêmes données en direction du terminal mobile.

Une transposition de la technique de "soft handover" au HSDPA se révèle impossible, l'ordonnancement étant géré de façon indépendante au niveau de chaque station émettrice et en fonction de critères d'ordonnancement qui lui sont propres. Le document FOLKE M, LANDSTROM S: "An NS Module for Simulation of HSPDA" TECHNICAL REPORT décrit un procédé d'ordonnancement de paquets pour la transmission sur un canal HS-DSCH dans le cadre du HSDCA. Ce procédé est réalisé indépendamment pour chaque station. Une liste de terminaux connectés à cette station et ayant un paquet de données en attente d'émission est réalisée. L'ordonnancement des terminaux pour transmettre successivement les paquets est ensuite déterminé en utilisant différents types de protocoles (Round Robin, MAX SIR ..).

Il existe donc un besoin d'une technique permettant d'augmenter la puissance du signal reçu par un terminal mobile dans des zones de recouvrement d'au moins deux cellules en gardant les avantages de la mise en oeuvre d'un lien radio descendant à accès partagé dans le temps dans une cellule.

L'invention répond à ce besoin en proposant un procédé d'ordonnancement pour un intervalle de temps d'émission donné, le temps étant divisé en intervalles de temps pour un multiplexage temporel des transmissions vers une pluralité de terminaux. Le procédé comprend :
a. une étape d'établissement d'une première liste de terminaux dits actifs, ayant au moins un paquet de données en attente d'émission, lesdits terminaux étant rattachés à au moins une des stations émettrices d'un groupe de stations émettrices ;
b. une étape de test consistant à vérifier si la première liste contient au moins un terminal ;
c. si le test est positif, une étape de sélection dans la première liste d'un terminal ;
d. une étape d'ajout dans une seconde liste du terminal sélectionné ;
e. une étape de détermination de la ou des stations émettrices auxquelles le terminal sélectionné est rattaché ;
f. dans le cas où la première liste contient au moins un autre terminal également rattaché à la ou à au moins une des stations émettrices déterminées à l'étape e, une étape de suppression dudit autre terminal de la première liste,
les étapes b à f étant réitérées jusqu'à ce que la première liste soit vide, et, lorsque la première liste est vide, il est prévu une étape de commande d'émission durant l'intervalle de temps donné, vers le ou les terminaux de la seconde liste, du ou des paquets de données en attente d'émission respectifs, ladite étape de commande d'émission consistant, dans le cas où un terminal de la seconde liste est rattaché à au moins deux stations émettrices, à commander l'émission du paquet de données en attente d'émission pour ce terminal à partir des deux stations émettrices.

L'invention consiste dans un premier temps à établir une première liste de terminaux, ayant au moins un paquet en attente d'émission dans au moins une des stations émettrices d'un groupe prédéterminé. Un terminal situé dans une zone de recouvrement peut être rattaché à plusieurs stations émettrices. Si un tel terminal est sélectionné lors de l'étape de sélection, il va être inséré dans une seconde liste et l'émission pendant l'intervalle de temps d'émission aura lieu de façon synchronisée par l'ensemble des stations émettrices auxquelles il est rattaché. Ces émissions simultanées entraînent une amélioration de la puissance reçue par le terminal. Elles permettent en outre de réduire de façon significative le niveau d'interférence intercellulaire entre les stations émettrices du groupe. Sur ces stations émettrices, auxquelles le terminal sélectionné est rattaché, aucune autre émission ne peut avoir lieu ; les terminaux ayant au moins un paquet en attente d'émission sur ces stations émettrices sont donc supprimés de la première liste. Ainsi, le fait de réaliser l'étape de sélection de façon globale au niveau de l'ensemble des stations émettrices d'un groupe prédéterminé permet d'augmenter de façon significative les capacités des stations émettrices du groupe.

Avantageusement, l'étape de sélection dans la première liste d'un terminal est réalisée en fonction de mesures de qualité de lien radio effectuées par les terminaux de la première liste sur un signal radio de référence d'au moins une station émettrice à laquelle ils sont rattachés.

Un terminal remonte généralement, pour chaque intervalle de temps d'émission, les mesures qu'il effectue sur un signal de référence d'au moins une des stations émettrices à laquelle il est rattaché. L'étape de sélection en fonction dé ces mesures permet de choisir pour chaque intervalle de temps d'émission le terminal qui présente la meilleure qualité de réception. Ainsi le procédé s'adapte aux conditions radio qui évoluent très rapidement au fil des intervalles de temps d'émission.

De préférence, l'étape de sélection dans la première liste d'un terminal est réalisée à l'aide d'un algorithme d'ordonnancement opportuniste.

Un algorithme d'ordonnancement opportuniste permet également de garantir un accès équitable de la pluralité de terminaux au canal radio partagé, en maximisant le débit de données transmises.

L'invention concerne également un dispositif d'ordonnancement pour un intervalle de temps d'émission, le temps étant divisé en intervalles de temps pour un multiplexage temporel des transmissions vers une pluralité de terminaux. Le dispositif comprend :
- des moyens d'établissement d'une première liste de terminaux dits actifs, agencés pour établir une liste de terminaux ayant au moins un paquet de données en attente d'émission et étant rattachés à au moins une des stations émettrices du groupe de stations émettrices ;
- des moyens de test, agencés pour vérifier si la première liste contient au moins un terminal ;
- des moyens de sélection dans la première liste d'un terminal;
- des moyens d'ajout dans une seconde liste du terminal sélectionné, agencés pour ajouter à une seconde liste le terminal sélectionné ;
- des moyens de détermination de stations émettrices de rattachement, agencés pour déterminer la ou les stations émettrices auxquelles le terminal sélectionné est rattaché ;
- des moyens de suppression, agencés pour supprimer de la première liste des terminaux rattachés à la ou à au moins une des stations émettrices déterminées par les moyens de détermination ;
- des moyens de commande d'émission durant l'intervalle de temps donné, agencés pour commander l'émission vers le ou les terminaux de la seconde liste du ou des paquets de données en attente d'émission respectifs, et dans le cas où un terminal de la seconde liste est rattaché à au moins deux stations émettrices, à commander l'émission du paquet de données en attente d'émission pour ce terminal à partir des deux stations émettrices.

L'invention concerne également une station de base agencée pour émettre des paquets de données durant un intervalle de temps d'émission, le temps étant divisé en intervalles de temps pour un multiplexage temporel des transmissions vers une pluralité de terminaux, comprenant un dispositif d'ordonnancement pour un intervalle de temps d'émission tel que décrit ci-dessus et au moins une station émettrice d'un groupe de stations émettrices.

L'invention concerne en outre :
- un programme d'ordonnancement durant un intervalle de temps d'émission, le temps étant divisé en intervalles de temps pour un multiplexage temporel des transmissions vers une pluralité de terminaux, pour un dispositif d'ordonnancement comprenant des instructions de code de programme destinées à commander l'exécution de celles des étapes du procédé tel que décrit ci-dessus destinées à être exécutées par le dispositif d'ordonnancement, lorsque ledit programme est exécuté par le dispositif d'ordonnancement ;
- un support d'enregistrement lisible par un dispositif d'ordonnancement sur lequel est enregistré le programme décrit ci-dessus.

L'invention sera mieux comprise à l'aide de la description suivante d'un mode de réalisation particulier du procédé de l'invention, en référence aux dessins annexés sur lesquels :
- la figure 1 représente une partie d'un réseau de communication ;
- la figure 2 représente les étapes du procédé d'ordonnancement selon un mode particulier de réalisation de invention ;
- la figure 3 représente un dispositif d'ordonnancement selon l'invention.

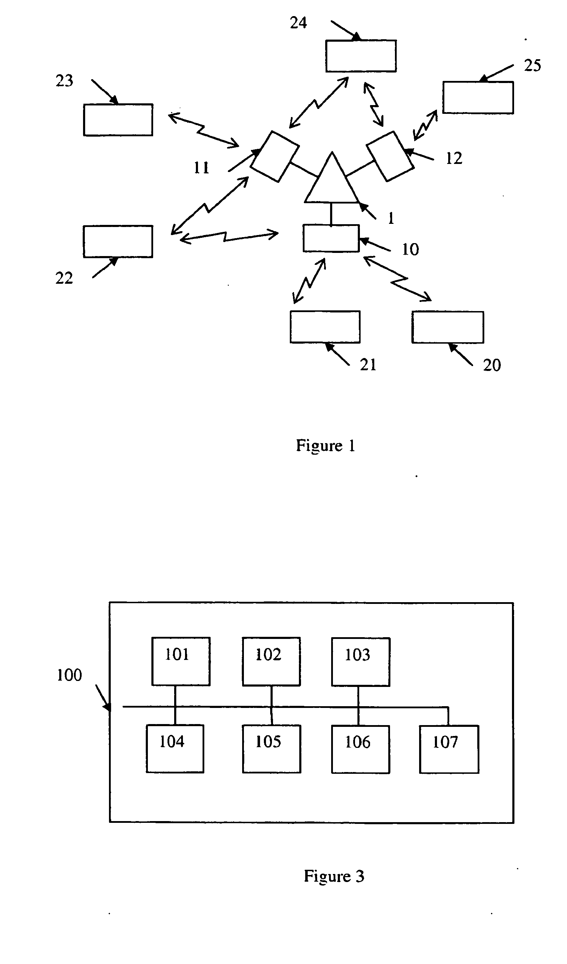

Sur la figure 1, on a représenté une partie d'un réseau de communication comprenant une station de base 1 ou Node B et trois stations émettrices 10, 11 et 12. On désigne couramment une telle configuration sous le nom de site tri-sectoriel. Les stations émettrices 10, 11, 12 correspondent aux différentes antennes commandées par la même station 1 de base. Une pluralité de terminaux 20, 21, 22, 23, 24, 25 est représentée sur la figure 1. Les terminaux 20 et 21 ont un lien de communication avec la station émettrice 10, le terminal 23 avec la station émettrice 11 et le terminal 25 avec la station émettrice 12. Le terminal 24 se situe dans une zone de recouvrement des stations émettrices 11 et 12 et est rattaché à ces deux stations 11, 12 par deux liens radio. Le terminal 22 se situe dans une zone de recouvrement des stations émettrices 10 et 11 et est rattaché à ces deux stations 10, 11 par deux liens radio.

Le terminal 24 est rattaché à la station émettrice correspondant au meilleur signal de référence, c'est-à-dire à la station émettrice pour laquelle la puissance du signal de référence reçue par le terminal est la meilleure, par exemple la station émettrice 12, ainsi qu'à la station émettrice correspondant au deuxième meilleur signal de référence, par exemple la station émettrice 11, si la différence de puissance entre le meilleur signal de référence et le deuxième meilleur signal de référence est inférieure à un seuil prédéterminé, par exemple de 3 dB, pendant une durée suffisamment longue, de l'ordre de la seconde. Un procédé de décision particulier au sein de la station émettrice permet au terminal d'être connecté simultanément à plusieurs stations émettrices. La décision de rattacher un terminal à une ou plusieurs stations émettrices est basée sur des mesures, moyennées sur une période de l'ordre de la seconde, de la puissance du signal de référence émis par chaque station émettrice et reçu par le terminals, réalisées par le terminal et remontées de façon régulière vers celle-ci. L'ensemble des liens radio utilisés simultanément entre le réseau et le terminal est appelé "ensemble actif" ("active set" en anglais). Lorsque le terminal, rattaché à une station émettrice courante, commence à s'éloigner de celle-ci et se rapproche d'une ou plusieurs stations émettrices voisines, un ou plusieurs liens radio peuvent être établis avec l'une de celles-ci et coexister avec celui de la station émettrice courante. Ce dernier est supprimé lorsque les conditions radio se trouvent trop défavorables. Un tel procédé de décision est mis en oeuvre sur les réseaux UMTS de type CDMA, pour "Code Division Multiple Access", et n'est pas plus détaillé ici. Le terminal peut gérer jusqu'à 6 liens radio actifs.

Dans le cadre de l'invention, on considère que les stations émettrices mettent en oeuvre un canal radio à accès partagé dans le temps pour la transmission de paquets de données, à haut débit dans le sens descendant ; il s'agit du HSDPA pour "High Speed Downlink Packet Access". Le canal radio à accès partagé HS-DSCH, canal descendant, est partagé dans le temps, dans une cellule donnée, entre une pluralité de terminaux mobiles. Le temps est donc divisé en intervalles de temps, d'une durée de l'ordre de la milliseconde, pour un multiplexage temporel des transmissions vers une pluralité de terminaux.

Par exemple, sur la figure 1, le canal radio d'émission de la station émettrice 10 est partagé dans le temps, dans le sens descendant, entre les terminaux 20 et 21. Pour un intervalle de temps donné, l'émission s'effectue vers le terminal 20, puis pour un autre intervalle de temps vers le terminal 21, en supposant que tous deux aient des paquets de données en attente d'émission.

Par la suite, un terminal est dit actif, si au moins un paquet de données est en attente d'émission vers ce terminal dans une station émettrice.

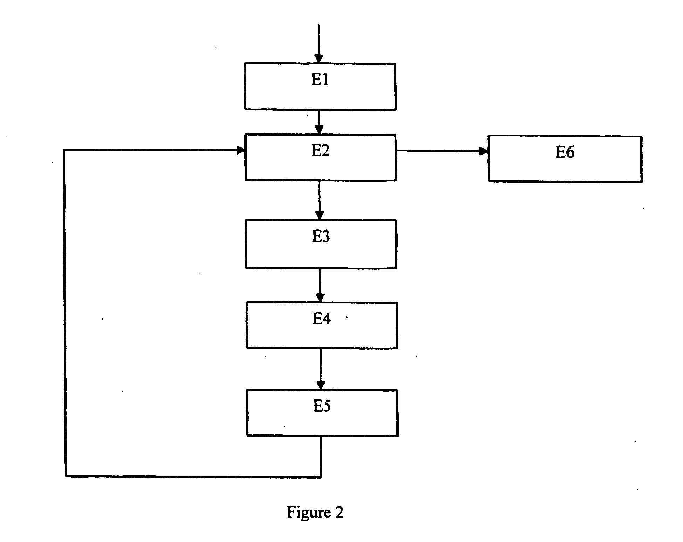

Le procédé d'ordonnancement pour un intervalle de temps d'émission donné va maintenant être décrit en référence à la figure 2.

Une liste de terminaux, appelée "seconde liste", est vide à l'initialisation du procédé.

Une première étape d'établissement E1 consiste à établir une première liste de terminaux 20, 21, 22, 23, 24, 25 actifs, ayant au moins un paquet de données en attente d'émission dans au moins une des stations 10, 11, 12 émettrices d'un groupe de stations émettrices. A titre d'exemple pour la suite, on considère que les stations émettrices 10, 11 et 12 forment un groupe prédéterminé de stations émettrices, que les terminaux 20, 21, 22, 23 et 24 ont au moins un paquet de données en attente d'émission dans au moins une des stations émettrices du groupe prédéterminé, que le terminal 25 n'a aucun paquet en attente d'émission. La première liste est alors la suivante: {20, 21, 22, 23, 24}.

On passe ensuite à une deuxième étape de test E2 consistant à vérifier si la première liste contient au moins un terminal.

Si la première liste n'est pas vide, on passe à une troisième étape E3 de sélection dans la première liste d'un terminal.

Dans un premier mode de réalisation, l'étape de sélection E3 est réalisée à l'aide d'un algorithme d'ordonnancement équitable, par exemple de type Round Robin. Dans ce type d'algorithme, les ressources radio sont réparties de façon équitable entre les terminaux indépendamment des conditions radio. On sélectionne dans la première liste un terminal et, dans une étape E4, on ajoute le terminal sélectionné dans la seconde liste de terminaux et on le supprime de la première liste de terminaux.

Dans un deuxième mode de réalisation, l'étape de sélection E3 est réalisée à l'aide d'un algorithme d'ordonnancement opportuniste. Un algorithme d'ordonnancement opportuniste permet également de garantir un accès équitable de la pluralité des terminaux au canal radio partagé en maximisant le débit de données transmises. On calcule pour chacun des terminaux de la première liste une métrique d'opportunité. Cette métrique d'opportunité peut être calculée par exemple à l'aide de l'algorithme "Proportional Fair". Cet algorithme est décrit dans le brevet US 6,449,490. La métrique d'opportunité est définie pour chaque terminal comme le rapport entre le débit estimé réalisable sur un intervalle de temps donné T et le débit moyen réalisé jusqu'à cet intervalle de temps. Le débit estimé réalisable pour l'intervalle de temps donné T pour le terminal i, d(i, T) est calculé à partir des mesures de qualité radio effectuées par le terminal à chaque intervalle de temps. Le débit moyen réalisé r(i, T) est mis à jour pour chaque intervalle de temps T de la façon suivante:
r(i,T) = (1-a) r(i, T-1) + a e(i, T-1)
   où a est un paramètre variant entre 0 et 1 et e(i, T-1) correspond au débit effectivement réalisé par le terminal i à l'intervalle de temps précédent T-1.

D'autres algorithmes d'ordonnancement opportuniste peuvent également être utilisés. On peut également prendre par exemple comme métrique d'opportunité le débit estimé réalisable.

Le calcul de la métrique d'opportunité est réalisé en fonction de mesures de qualité de lien radio, notamment la mesure appelée CQI pour "Channel Quality Indicator", effectuées par les terminaux, pour chaque intervalle de temps d'émission, sur un signal dit de référence émis sur un canal radio de référence (CPICH pour "Common PIlot Channel") de la station émettrice à laquelle ils sont rattachés. Les mesures effectuées par les terminaux sont remontées vers la station de base 1. Cette mesure de la qualité du lien radio est représentative du rapport signal à interférence sur le lien radio avec la station émettrice. Elle est convertie en débit estimé réalisable.

Dans le cas d'un terminal rattaché à au moins deux stations émettrices, suivant les capacités de ce terminal, on peut disposer d'une ou de plusieurs mesures de qualité radio pour le calcul de la métrique d'opportunité. Dans une première variante, on utilise la meilleure mesure de qualité du lien radio remontée par le terminal. Dans une deuxième variante, on combine les mesures de qualité radio réalisées par le terminal sur la pluralité de stations émettrices.

Dans ce deuxième mode de réalisation, on sélectionne dans la première liste un terminal présentant la meilleure métrique d'opportunité et dans une étape E4, on ajoute le terminal sélectionné dans la seconde liste de terminaux et on le supprime de la première liste de terminaux.

Dans l'exemple choisi, supposons que le terminal 24 correspond à celui qui est sélectionne à l'étape E3. A l'issue de l'étape E4, la seconde liste comprend alors le terminal 24: {24}.

A l'issue de l'étape E4 et à l'étape E5, on détermine la ou des stations émettrices auxquelles le terminal sélectionné est rattaché. Dans l'exemple choisi, il s'agit des stations émettrices 11 et 12.

Dans le cas où la première liste contient au moins un autre terminal également rattaché à la ou à au moins une des stations émettrices déterminées à l'étape E5, on supprime cet autre terminal de la première liste.

Dans l'exemple choisi, on supprime donc de la première liste les terminaux rattachés à au moins une des stations émettrices 11 et 12, à savoir les terminaux 23 et 22. La première liste est alors la suivante: {20, 21}.

A l'issue de cette étape E5, le procédé retourne à l'étape E2.

Dans l'exemple choisi, en supposant que le terminal 21 est celui qui est sélectionné à l'étape E3, à l'issue de la deuxième itération des étapes E2 à E5 du procédé, la première liste est vide et la seconde liste comprend les terminaux 24 et 21.

Si le résultat du test de l'étape E2 montre que la première liste de terminaux est vide, on passe alors à une étape E6 de commande d'émission durant l'intervalle de temps donné vers le ou les terminaux de la seconde liste du ou des paquets de données en attente d'émission respectifs. L'étape E6 de commande d'émission consiste à commander l'émission du ou des paquets de données en attente d'émission vers le ou les terminaux de la seconde liste. Dans le cas où un terminal de la seconde liste est rattaché à au moins deux stations émettrices, l'émission du paquet de données en attente d'émission à partir des deux stations émettrices est commandée pour l'intervalle de temps donné.

Dans l'exemple choisi, on commande à la station émettrice 10 d'émettre le paquet de données en attente d'émission à destination du terminal 21, figurant dans la seconde liste durant l'intervalle de temps d'émission donné. Le terminal 24, figurant également dans cette seconde liste et étant rattaché à deux stations émettrices, on commande aux stations émettrices 11 et 12 d'émettre le même paquet de données à destination du terminal 24.

Le procédé se répète ensuite pour l'intervalle de temps d'émission suivant.

On va maintenant décrire un dispositif 100 d'ordonnancement pour un intervalle de temps d'émission, en référence à la figure 3.

Le dispositif 100 d'ordonnancement comprend :
- des moyens 101 d'établissement d'une première liste de terminaux dits actifs, agencés pour établir une liste de terminaux ayant au moins un paquet de données en attente d'émission et étant rattachés à au moins une des stations émettrices du groupe de stations émettrices ;
- des moyens 102 de test, agencés pour vérifier si la première liste contient au moins un terminal ;
- des moyens 103 de sélection dans la première liste d'un terminal ;
- des moyens 104 d'ajout dans une seconde liste du terminal sélectionné, agencés pour ajouter à une seconde liste le terminal sélectionné ;
- des moyens 105 de détermination de stations émettrices de rattachement, agencés pour déterminer la ou les stations émettrices auxquelles le terminal sélectionné est rattaché ;
- des moyens 106 de suppression, agencés pour supprimer de la première liste des terminaux rattachés à la ou à au moins une des stations émettrices déterminées par les moyens 105 de détermination ;
- des moyens 107 de commande d'émission durant l'intervalle de temps donné, agencés pour commander l'émission vers le ou les terminaux de la seconde liste du ou des paquets de données en attente d'émission respectifs et dans le cas où un terminal de la seconde liste est rattaché à au moins deux stations émettrices, à commander l'émission du paquet de données en attente d'émission pour ce terminal à partir des deux stations émettrices.

Le dispositif 100 commande l'émission des stations émettrices 10, 11, 12 qui lui sont raccordées par l'intermédiaire des moyens 107 de commande.

Une station 1 de base conforme à la version R5 de l'UMTS et supportant le HSDPA peut comprendre le dispositif 100 d'ordonnancement tel que décrit ci-dessus et au moins une station émettrice commandée par le dispositif.

Les modules 101, 102, 103, 104, 105, 106, 107 qui mettent en oeuvre le procédé précédemment décrit, sont de préférence des modules logiciels comprenant des instructions logicielles pour faire exécuter les étapes du procédé précédemment décrit par le dispositif 100. Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention est décrite sur la base d'un réseau de communication conforme à la version R5 de la norme UMTS et supportant le HSDPA. Elle est également applicable à tout type de réseau mettant en oeuvre un lien radio à accès partagé par une pluralité de terminaux, comme par exemple la norme CDMA 2000 1XEVDO supportant les canaux HDR ("High Data Rate").

## Revendications

1. Procédé d'ordonnancement pour un intervalle de temps d'émission donné, le temps étant divisé en intervalles de temps pour un multiplexage temporel des transmissions vers une pluralité de terminaux, ledit procédé comprenant :
a. une étape (E1) d'établissement d'une première liste de terminaux (20, 21, 22, 23, 24, 25) dits actifs, ayant au moins un paquet de données en attente d'émission, lesdits terminaux étant rattachés à au moins une des stations (10, 11, 12) émettrices d'un groupe de stations émettrices ;
b. une étape (E2) de test consistant à vérifier si la première liste contient au moins un terminal ;
c. si le test est positif, une étape (E3) de sélection dans la première liste d'un terminal ;
d. une étape (E4) d'ajout dans une seconde liste du terminal sélectionné ;
e. une étape (E5) de détermination de la ou des stations émettrices auxquelles le terminal sélectionné est rattaché ;
f. dans le cas où la première liste contient au moins un autre terminal également rattaché à la ou à au moins une des stations émettrices déterminées à l'étape e, une étape (E5) de suppression dudit autre terminal de la première liste,
les étapes b à f étant réitérées jusqu'à ce que la première liste soit vide, et, lorsque la première liste est vide, il est prévu une étape (E6) de commande d'émission durant l'intervalle de temps donné, vers le ou les terminaux de la seconde liste, du ou des paquets de données en attente d'émission respectifs, ladite étape de commande d'émission consistant, dans le cas où un terminal de la seconde liste est rattaché à au moins deux stations émettrices, à commander l'émission du paquet de données en attente d'émission pour ce terminal à partir des deux stations émettrices.

2. Procédé selon la revendication 1, dans lequel l'étape (E3) de sélection dans la première liste d'un terminal est réalisée en fonction de mesures de qualité de lien radio effectuées par les terminaux de la première liste sur un signal radio de référence d'au moins une station émettrice à laquelle ils sont rattachés.

3. Procédé selon la revendication 2, dans lequel l'étape (E3) de sélection dans la première liste d'un terminal est réalisée à l'aide d'un algorithme d'ordonnancement opportuniste.

4. Procédé selon l'une quelconque des revendications précédentes, dans lequel les stations (10, 11, 12) émettrices du groupe correspondent aux différentes antennes d'une même station (1) de base.

5. Dispositif (100) d'ordonnancement pour un intervalle de temps d'émission, le temps étant divisé en intervalles de temps pour un multiplexage temporel des transmissions vers une pluralité de terminaux, ledit dispositif comprenant :
- des moyens (101) d'établissement d'une première liste de terminaux dits actifs, agencés pour établir une liste de terminaux ayant au moins un paquet de données en attente d'émission et étant rattachés à au moins une des stations émettrices du groupe de stations émettrices ;
- des moyens (102) de test, agencés pour vérifier si la première liste contient au moins un terminal ;
- des moyens (103) de sélection dans la première liste d'un terminal ;
- des moyens (104) d'ajout dans une seconde liste du terminal sélectionné, agencés pour ajouter à une seconde liste le terminal sélectionné ;
- des moyens (105) de détermination de stations émettrices de rattachement, agencés pour déterminer la ou les stations émettrices auxquelles le terminal sélectionné est rattaché ;
- des moyens (106) de suppression, agencés pour supprimer de la première liste des terminaux rattachés à la ou à au moins une des stations émettrices déterminées par les moyens (105) de détermination ;
- des moyens (107) de commande d'émission durant l'intervalle de temps donné, agencés pour commander l'émission vers le ou les terminaux de la seconde liste du ou des paquets de données en attente d'émission respectifs, et dans le cas où un terminal de la seconde liste est rattaché à au moins deux stations émettrices, à commander l'émission du paquet de données en attente d'émission pour ce terminal à partir des deux stations émettrices.

6. Station de base (1) agencée pour émettre des paquets de données durant un intervalle de temps d'émission, le temps étant divisé en intervalles de temps pour un multiplexage temporel des transmissions vers une pluralité de terminaux, comprenant un dispositif (100) d'ordonnancement pour un intervalle de temps d'émission selon la revendication 5 et au moins une station émettrice (10, 11, 12) d'un groupe de stations émettrices.

7. Programme d'ordonnancement durant un intervalle de temps d'émission, le temps étant divisé en intervalles de temps pour un multiplexage temporel des transmissions vers une pluralité de terminaux, pour un dispositif (100) d'ordonnancement comprenant des instructions de code de programme destinées à commander l'exécution de celles des étapes du procédé selon les revendications 1 à 4 destinées à être exécutées par le dispositif d'ordonnancement, lorsque ledit programme est exécuté par le dispositif d'ordonnancement.

8. Support d'enregistrement lisible par un dispositif (100) d'ordonnancement sur lequel est enregistré le programme selon la revendication 7.

## Claims

1. Scheduling method for a given sending time slot, the time being divided into time slots for a time-division multiplexing of the transmissions to a plurality of terminals, said method comprising:
a. a step (E1) for establishing a first list of so-called active terminals (20, 21, 22, 23, 24, 25), having at least one data packet waiting to be sent, said terminals being attached to at least one of the sending stations (10, 11, 12) of a group of sending stations;
b. a test step (E2) consisting in checking whether the first list contains at least one terminal;
c. if the test is positive, a step (E3) for selecting a terminal from the first list;
d. a step (E4) for adding the selected terminal to a second list;
e. a step (E5) for determining the sending station or stations to which the selected terminal is attached;
f. in the case where the first list contains at least one other terminal also attached to the or to at least one of the sending stations determined in the step e, a step (E5) for deleting said other terminal of the first list,
the steps b to f being repeated until the first list is empty, and, when the first list is empty, a step (E6) is provided for ordering the sending, during the given time slot, to the terminal or terminals of the second list, of the respective data packet or packets waiting to be sent, said sending order step consisting, in the case where a terminal of the second list is attached to at least two sending stations, in ordering the sending of the data packet waiting to be sent for this terminal from the two sending stations.

2. Method according to Claim 1, in which the step (E3) for selecting a terminal from the first list is carried out according to radio link quality measurements performed by the terminals of the first list on a reference radio signal from at least one sending station to which they are attached.

3. Method according to Claim 2, in which the step (E3) for selecting a terminal from the first list is performed using an opportunistic scheduling algorithm.

4. Method according to any one of the preceding claims, in which the sending stations (10, 11, 12) of the group correspond to the different antennas of one and the same base station (1).

5. Scheduling device (100) for a sending time slot, the time being divided into time slots for a time-division multiplexing of the transmissions to a plurality of terminals, said device comprising:
- means (101) for establishing a first list of so-called active terminals, designed to establish a list of terminals having at least one data packet waiting to be sent and being attached to at least one of the sending stations of the group of sending stations;
- test means (102), designed to check whether the first list contains at least one terminal;
- means (103) for selecting a terminal from the first list;
- means (104) for adding the selected terminal to the second list, designed to add the selected terminal to a second list;
- means (105) for determining serving sending stations, designed to determine the sending station or stations to which the selected terminal is attached;
- deletion means (106), designed to delete from the first list terminals attached to the or to the at least one of the sending stations determined by the determination means (105);
- means (107) for ordering sending during the given time slot, designed to order the sending, to the terminal or terminals of the second list, of the respective data packet or packets waiting to be sent, and in the case where a terminal of the second list is attached to at least two sending stations, to order the sending of the data packet waiting to be sent for this terminal from the two sending stations.

6. Base station (1) designed to send data packets during a sending time slot, the time being divided into time slots for a time-division multiplexing of transmissions to a plurality of terminals, comprising a scheduling device (100) for a sending time slot according to Claim 5 and at least one sending station (10, 11, 12) from a group of sending stations.

7. Program for scheduling during a sending time slot, the time being divided into time slots for a time-division multiplexing of transmissions to a plurality of terminals, for a scheduling device (100) comprising program code instructions intended to control the execution of those of the steps of the method according to Claims 1 to 4 intended to be executed by the scheduling device, when said program is run by the scheduling device.

8. Storage medium that can be read by a scheduling device (100) on which the program according to Claim 7 is stored.

## Patentansprüche

1. Ablaufsteuerungsverfahren für ein gegebenes Sendezeitintervall, wobei die Zeit in Zeitintervalle für ein Zeitmultiplex der Übertragungen zu mehreren Endgeräten aufgeteilt ist, wobei das Verfahren enthält:
a. einen Schritt (E1) der Erstellung einer ersten Liste von so genannten aktiven Endgeräten (20, 21, 22, 23, 24, 25), die mindestens ein zum Senden bereitstehendes Datenpaket haben, wobei die Endgeräte an mindestens eine der Sendestationen (10, 11, 12) einer Gruppe von Sendestationen angeschlossen sind;
b. einen Testschritt (E2), der darin besteht, zu überprüfen, ob die erste Liste mindestens ein Endgerät enthält;
c. wenn der Test positiv ist, einen Schritt (E3) der Auswahl eines Endgeräts aus der ersten Liste;
d. einen Schritt (E4) des Hinzufügens des ausgewählten Endgeräts zu einer zweiten Liste;
e. einen Schritt (E5) der Bestimmung der Sendestation oder der Sendestationen, an die das ausgewählte Endgerät angeschlossen ist;
f. wenn die erste Liste mindestens ein weiteres Endgerät enthält, das ebenfalls an die oder mindestens eine der im Schritt e bestimmten Sendestationen angeschlossen ist, einen Schritt (E5) des Entfernens des weiteren Endgeräts aus der ersten Liste,
wobei die Schritte b bis f wiederholt werden, bis die erste Liste leer ist, und wenn die erste Liste leer ist, ein Schritt (E6) der Sendesteuerung, während des gegebenen Zeitintervalls, des oder der jeweils zum Senden bereitstehenden Datenpakete zu dem oder den Endgeräten der zweiten Liste vorgesehen ist, wobei der Schritt der Sendesteuerung in dem Fall, in dem ein Endgerät der zweiten Liste an mindestens zwei Sendestationen angeschlossen ist, darin besteht, das Senden des für dieses Endgerät zum Senden bereitstehenden Datenpakets ausgehend von den zwei Sendestationen zu steuern.

2. Verfahren nach Anspruch 1, bei dem der Schritt (E3) der Auswahl eines Endgeräts aus der ersten Liste in Abhängigkeit von Funkverbindungsqualitätsmessungen durchgeführt wird, die von den Endgeräten der ersten Liste an einem Bezugsfunksignal mindestens einer Sendestation ausgeführt werden, an die sie angeschlossen sind.

3. Verfahren nach Anspruch 2, bei dem der Schritt (E3) der Auswahl eines Endgeräts aus der ersten Liste mit Hilfe eines opportunistischen Ablaufsteuerungsalgorithmus durchgeführt wird.

4. Verfahren nach einem der vorhergehenden Ansprüche, bei dem die Sendestationen (10, 11, 12) der Gruppe den verschiedenen Antennen einer gleichen Basisstation (1) entsprechen.

5. Ablaufsteuerungsvorrichtung (100) für ein Sendezeitintervall, wobei die Zeit in Zeitintervalle für ein Zeitmultiplex der Übertragungen zu mehreren Endgeräten aufgeteilt ist, wobei die Vorrichtung enthält:
- Einrichtungen (101) zur Erstellung einer ersten Liste von so genannten aktiven Endgeräten, die eingerichtet sind, um eine Liste von Endgeräten zu erstellen, die mindestens ein zum Senden bereitstehendes Datenpaket haben und an mindestens eine der Sendestationen der Gruppe von Sendestationen angeschlossen sind;
- Testeinrichtungen (102), die eingerichtet sind, um zu prüfen, ob die erste Liste mindestens ein Endgerät enthält;
- Einrichtungen (103) zur Auswahl eines Endgeräts aus der ersten Liste;
- Einrichtungen (104) zum Hinzufügen des ausgewählten Endgeräts zu einer zweiten Liste, die eingerichtet sind, um das ausgewählte Endgerät einer zweiten Liste hinzuzufügen;
- Einrichtungen (105) zur Bestimmung von Anschluss-Sendestationen, die eingerichtet sind, um die Sendestation oder die Sendestationen zu bestimmen, an die das ausgewählte Endgerät angeschlossen ist;
- Entfernungseinrichtungen (106), die eingerichtet sind, um Endgeräte aus der ersten Liste zu entfernen, die an die Sendestation oder mindestens eine der von den Bestimmungseinrichtungen (105) bestimmten Sendestationen angeschlossen sind;
- Einrichtungen (107) zur Sendesteuerung während des gegebenen Zeitintervalls, die eingerichtet sind, um das Senden des oder der zum Senden bereitstehenden Datenpakete an das oder die Endgeräte der zweiten Liste zu steuern, und in dem Fall, in dem ein Endgerät der zweiten Liste an mindestens zwei Sendestationen angeschlossen ist, das Senden des für dieses Endgerät zum Senden bereitstehenden Datenpakets ausgehend von den zwei Sendestationen zu steuern.

6. Basisstation (1), die eingerichtet ist, um Datenpakete während eines Sendezeitintervalls zu senden, wobei die Zeit in Zeitintervalle für ein Zeitmultiplex der Übertragungen zu mehreren Endgeräten aufgeteilt ist, die eine Ablaufsteuerungsvorrichtung (100) für ein Sendezeitintervall nach Anspruch 5 und mindestens eine Sendestation (10, 11, 12) einer Gruppe von Sendestationen enthält.

7. Programm zur Ablaufsteuerung während eines Sendezeitintervalls, wobei die Zeit in Zeitintervalle für ein Zeitmultiplex der Übertragungen zu mehreren Endgeräten aufgeteilt ist, für eine Ablaufsteuerungsvorrichtung (100), das Programmcodeanweisungen enthält, die zur Steuerung der Ausführung von denjenigen der Schritte des Verfahrens nach den Ansprüchen 1 bis 4 enthält, die dazu bestimmt sind, von der Ablaufsteuerungsvorrichtung ausgeführt zu werden, wenn das Programm von der Ablaufsteuerungsvorrichtung ausgeführt wird.

8. Aufzeichnungsträger, der von einer Ablaufsteuerungsvorrichtung (100) lesbar ist, auf dem das Programm nach Anspruch 7 aufgezeichnet ist.
